(19) **Europäisches Patentamt / European Patent Office / Office européen des brevets**

(11) **EP 3 891 877 B1**

(12) # FASCICULE DE BREVET EUROPEEN

(45) Date de publication et mention de la délivrance du brevet:
**05.02.2025  Bulletin 2025/06**

(21) Numéro de dépôt: **19812795.3**

(22) Date de dépôt: **04.12.2019**

(51) Classification Internationale des Brevets (IPC):
**H02M 1/08** *(2006.01)*   **H02M 7/5383** *(2007.01)*
**H02M 7/48** *(2007.01)*   **H02M 7/53846** *(2007.01)*

(52) Classification Coopérative des Brevets (CPC):
**H02M 1/08; H02M 7/5383;** H02M 7/4815;
H02M 7/538466; Y02B 70/10

(86) Numéro de dépôt international:
**PCT/EP2019/083604**

(87) Numéro de publication internationale:
**WO 2020/115100 (11.06.2020 Gazette 2020/24)**

(54) **CONVERTISSEUR DE PUISSANCE DE CLASSE PHI-2 COMPRENANT UN CIRCUIT AUTO-OSCILLANT DE COMMANDE DE COMMUTATION**

KLASSE-PHI-2 -LEISTUNGSWANDLER MIT SELBSTSCHWINGENDER SCHALTERSTEUERSCHALTUNG

CLASS PHI-2 POWER CONVERTER COMPRISING A SELF-OSCILLATING SWITCH CONTROL CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2018  FR 1872357**

(43) Date de publication de la demande:
**13.10.2021  Bulletin 2021/41**

(73) Titulaires:
• **Commissariat à l'Energie Atomique et aux Energies Alternatives**
**75015 Paris (FR)**
• **Institut Polytechnique de Grenoble**
**38031 Grenoble Cedex 1 (FR)**

(72) Inventeurs:
• **MAKHOUL, Rawad**
**38054 Grenoble cedex 09 (FR)**
• **PERICHON, Pierre**
**38054 Grenoble cedex 09 (FR)**
• **MAYNARD, Xavier**
**38054 Grenoble cedex 09 (FR)**
• **ZHUANG, Jia**
**38054 Grenoble cedex 09 (FR)**

• **LEMBEYE, Yves**
**38450 Saint Georges de Commiers (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• **JUNGWON CHOI ET AL: "High-Frequency, High-Power Resonant Inverter With eGaN FET for Wireless Power Transfer", IEEE TRANSACTIONS ON POWER ELECTRONICS, vol. 33, no. 3, March 2018 (2018-03-01), USA, pages 1890 - 1896, XP055629531, ISSN: 0885-8993, DOI: 10.1109/ TPEL.2017.2740293**
• **SUN BAINAN ET AL: "Review of Resonant Gate Driver in Power Conversion", 2018 INTERNATIONAL POWER ELECTRONICS CONFERENCE (IPEC-NIIGATA 2018 -ECCE ASIA), IEEJ INDUSTRY APPLICATION SOCIETY, 20 May 2018 (2018-05-20), pages 607 - 613, XP033428428, DOI: 10.23919/IPEC.2018.8507536**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **KITAZAWA KEISUKE ET AL: "Analysis and Design of the Class-$\Phi_{2}$ Inverter", IECON 2018 - 44TH ANNUAL CONFERENCE OF THE IEEE INDUSTRIAL ELECTRONICS SOCIETY, IEEE, 21 October 2018 (2018-10-21), pages 1023 - 1028, XP033486423, DOI: 10.1109/ IECON.2018.8592487**
- **TOKE M ANDERSEN ET AL: "A VHF class E DC-DC converter with self-oscillating gate driver", APPLIED POWER ELECTRONICS CONFERENCE AND EXPOSITION (APEC), 2011 TWENTY-SIXTH ANNUAL IEEE, IEEE, 6 March 2011 (2011-03-06), pages 885 - 891, XP032013983, ISBN: 978-1-4244-8084-5, DOI: 10.1109/ APEC.2011.5744699**

**Description**

L'invention porte sur un convertisseur de puissance DC/AC à haute ou très haute fréquence de commutation. L'invention trouve son application en particulier dans la conversion d'une tension continue en une tension alternative ou continue, dans des gammes de fréquence radio HF (de 3 à 30 MHz) et VHF (de 30 à 300 MHz). La commutation du convertisseur dans les gammes de fréquence radio permet de réduire la taille des composants réactifs (inductances, condensateurs) des circuits de conversion de puissance, et de réduire ainsi le volume global de la chaîne de conversion de puissance, ce qui peut être avantageux pour des applications où la compacité et la masse sont des contraintes importantes.

Dans les convertisseurs de puissance DC/AC (également appelés onduleurs), la commutation est réalisée avec un interrupteur de puissance, par exemple un transistor en GaN (Nitrure de Gallium) ou un transistor de type MOS. Le transistor commute de l'état passant à l'état bloqué ou inversement, grâce à un circuit de pilotage dénommé circuit d'attaque de grille (ou « gate driver » dans la terminologie anglo-saxonne). En règle générale, dans les convertisseurs de puissance, une ou plusieurs résistances peuvent être rajoutées sur la grille du transistor afin de maîtriser les variations de tension ou de courant sur le transistor au démarrage du convertisseur (structure dite non-résonante). A chaque ordre de commutation transmis par le circuit d'attaque de grille au transistor, il y a une dissipation d'énergie dans la ou les résistances ajoutées sur la grille du transistor. Pour des fréquences de commutation de l'ordre de la dizaine ou de la centaine de kHz, la somme des pertes dues à la dissipation peut être considérée comme négligeable sur une durée donnée. En revanche, sur une même durée, la somme des pertes dues à la dissipation est beaucoup plus importante pour des fréquences de commutation de l'ordre de la dizaine ou de la centaine de MHz. Afin de réduire ce genre de dissipations, et d'éviter par la suite de dégrader le rendement du convertisseur, une structure dite résonante peut être employée, à partir de composants passifs de stockage d'énergie (condensateurs et inductances), au lieu d'utiliser une structure non-résonante. La structure résonante, contrairement à la structure non résonante, permet de stocker de l'énergie au cours d'une phase de commutation du transistor, et de la restituer au cours de la phase suivante au lieu de la dissiper dans les éléments parasites du transistor.

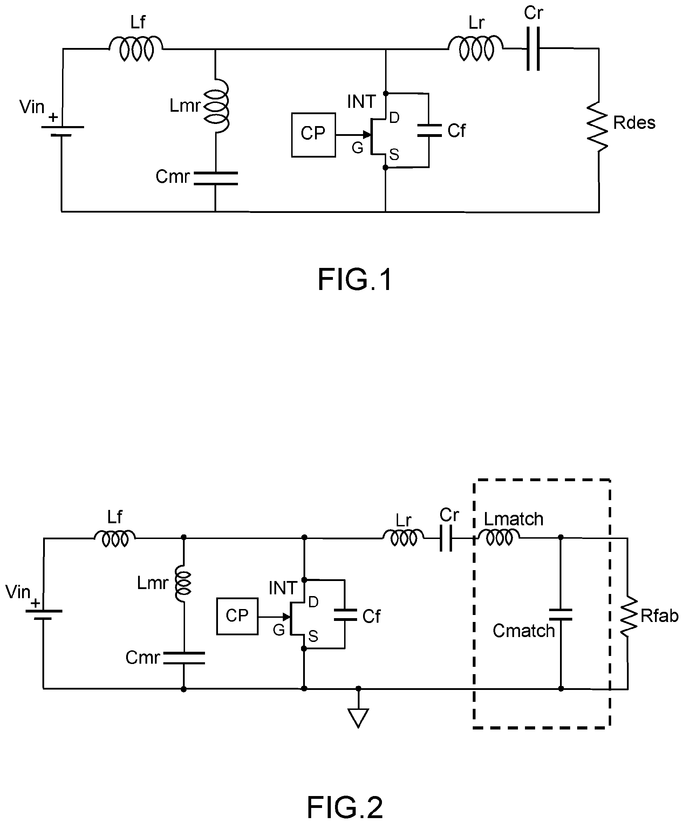

Parmi les convertisseurs DC/AC connus de l'état de la technique, le convertisseur de classe Phi-2 (Φ2) présente de nombreux avantages. Le convertisseur de classe Phi-2 est décrit notamment dans le document *« A high-frequency resonant inverter topology with low-voltage stress »* (Rivas et al., IEEE Transactions on power electronics, vol. 23, No. 4, July 2008) et le document « High-Frequency, High-Power Resonant Inverter With eGaN FET for Wireless Power Transfer » (Choi et al., IEEE Transactions on power electronics, vol. 33, No. 4, March 2018). Le convertisseur de classe PHI-2, illustré par la figure 1, comprend une inductance d'entrée Lf, connectée à la source de tension Vin à convertir, et ayant une valeur de même ordre de grandeur que l'inductance Lr d'un réseau résonant série Lr-Cr connecté entre le drain du transistor et la charge. Il comprend par ailleurs un filtre Lmr-Cmr, la fréquence de résonance du filtre Lmr-Cmr étant égale à deux fois la fréquence de commutation du transistor. Le filtre Lmr-Cmr est ajouté en parallèle du transistor afin de court-circuiter le second harmonique de la tension drain-source du transistor et réduire ainsi la contrainte en tension sur le transistor. Une telle structure est facilement intégrable sur circuit imprimé, du fait de la valeur réduite de l'inductance d'entrée Lf. L'absence d'inductance de forte valeur permet par ailleurs d'obtenir un transitoire plus court que dans d'autres types de convertisseurs, notamment ceux de la classe E, ce qui peut être avantageux pour réaliser des appels de puissance rapides dans le convertisseur. Les différentes valeurs des composants du convertisseur sont notamment sélectionnées pour que, lors de la commutation du transistor, la tension Vds soit quasiment nulle, afin de respecter la condition de commutation douce (ZVS, ou « Zero Voltage Switching » dans la terminologie anglo-saxonne).

En commutation douce (ZVS), les valeurs des composants du réseau résonant et de la capacité de sortie Cf (également appelée capacité shunt) du transistor sont sélectionnés de telle sorte que la tension Vds aux bornes du transistor soit nulle lors de chaque commutation du transistor, de l'état passant à l'état bloqué et inversement. Les pertes dans un transistor étant dues au produit de la tension à ses bornes par le courant le traversant, une tension nulle à chaque commutation permet de minimiser les pertes.

Dans un convertisseur de classe Phi-2, la tension drain-source est par ailleurs égale à environ deux fois la tension d'entrée Vin, ce qui limite la contrainte en tension sur le transistor. En diminuant la contrainte de tension, il est alors possible soit de gagner en rendement, avec une résistance à l'état passant $R_{DSON}$ plus faible que pour un convertisseur de la classe E, soit de gagner en compacité, en diminuant la taille de la puce sur laquelle se trouvent les différents éléments du circuit de conversion. De plus, la contrainte en tension plus faible permet de considérer la capacité parasite comme étant plus stable en valeur, ce qui facilite sa modélisation.

La commande de commutation du transistor peut être réalisée par un circuit d'attaque de grille CP conçu sous forme de circuit intégré sur une puce électronique, comme illustré par la figure 1. Toutefois, ce type de circuit d'attaque de grille n'est pas adapté pour des fréquences de commutation supérieures à 30 MHz, et en particulier supérieures à 35 MHz. En effet, au-delà de cette fréquence, les retards introduits par les circuits internes (portes logiques) du circuit d'attaque de grille CP deviennent prépondérants, et le circuit d'attaque de grille CP n'est plus en mesure de faire descendre le signal de pilotage en-dessous de la tension de seuil Vth du transistor (1,3 V pour un transistor GaN). Le transistor ne peut alors plus commuter, et le convertisseur ne fonctionne plus.

L'invention vise donc à se passer de composants actifs et de portes logiques pour la commande d'un transistor dans un convertisseur de structure Phi-2.

Un objet de l'invention permettant d'atteindre ce but, partiellement ou totalement, est un convertisseur de puissance selon la revendication 1.

Avantageusement, le convertisseur peut comprendre une deuxième inductance connectée à la borne de sortie, un premier condensateur connecté entre la borne de sortie et le potentiel de référence, la deuxième inductance, le premier condensateur et le premier pont diviseur capacitif étant configurés pour former un réseau d'adaptation d'impédance en « L » pour une valeur de charge prédéfinie en sortie du convertisseur.

Avantageusement, le convertisseur peut comprendre un pont diviseur résistif connecté entre la borne d'entrée et le potentiel de référence, disposant d'un deuxième point milieu connecté à la première inductance et au circuit réactif, le pont diviseur résistif étant configuré pour fournir une composante continue issue de la tension d'entrée, la composante continue étant égale à une tension de seuil entre l'électrode de commande et la deuxième électrode de l'interrupteur de puissance.

D'autres caractéristiques, détails et avantages de l'invention ressortiront à la lecture de la description faite en référence aux dessins annexés donnés à titre d'exemple :

[Fig.1] la figure 1, déjà décrite, représente un convertisseur de classe Phi-2 selon l'état de la technique ;
[Fig.2] la figure 2 représente un convertisseur de classe Phi-2 selon l'état de la technique, comprenant un réseau d'adaptation d'impédance ;
[Fig.3] la figure 3 représente un premier mode de réalisation d'un convertisseur de classe Phi-2 selon l'invention ;
[Fig.4] la figure 4 représente un mode de réalisation utile pour comprendre l'invention.

L'invention est décrite dans le cas où l'interrupteur de puissance est un transistor à effet de champ (par exemple MOSFET, JFET). Le substrat du transistor peut être réalisé en nitrure de gallium (GaN), en carbure de silicium (SiC), ou avec tout autre matériau semi-conducteur. Le drain, la source et la grille mentionnés dans la description peuvent être désignés de façon plus générale respectivement par une première électrode, une deuxième électrode et une électrode de commande. L'invention peut ainsi également s'appliquer à d'autres types d'interrupteurs de puissance, par exemple un transistor de type IGBT, un transistor bipolaire ou encore un thyristor.

Un convertisseur de classe Phi-2 est généralement dimensionné pour délivrer une puissance de sortie Pout à une impédance de charge souhaitée Rdes, à partir d'une tension d'entrée continue Vin, à une fréquence de commutation $f_{commutation}$. Les charges radiofréquences de puissance disponibles dans le commerce n'ont pas nécessairement une impédance de charge nominale Rfab égale à l'impédance de charge souhaitée Rdes. Dans ce cas, une adaptation d'impédance entre l'impédance de charge souhaitée Rdes et l'impédance de charge nominale Rfab doit ainsi être effectuée. Dans d'autres cas, pour une impédance de charge souhaitée Rdes, il n'est pas possible de dimensionner un convertisseur de classe Phi-2 qui permette d'obtenir une certaine valeur de puissance de sortie. Pour obtenir la puissance de sortie désirée, il est donc nécessaire d'utiliser une autre valeur de charge et d'adapter l'impédance. L'adaptation d'impédance peut même être effectuée lorsque la charge souhaitée Rdes et la charge nominale Rfab sont théoriquement égales, en raison des différents éléments parasites que le circuit peut comprendre.

Il convient dans ce cas, comme l'illustre la figure 2, d'insérer un circuit d'adaptation d'impédance en « L », comprenant une inductance d'adaptation d'impédance Lmatch et un condensateur d'adaptation d'impédance Cmatch.

L'article « Resistance Compression Networks for Radio-Frequency Power Conversion » (Y. Han, O. Leitermann, D.A. Jackson and D. J. Perreault, IEEE Transactions On Power Electronics, Vol. 22, No. 1, January 2007) décrit une méthode de détermination d'un circuit d'adaptation d'impédance.

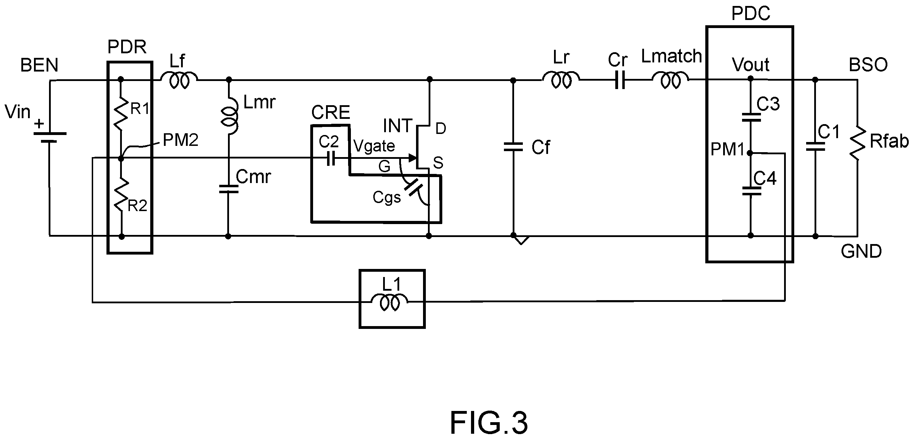

La figure 3 représente un premier mode de réalisation d'un convertisseur de classe Phi-2 selon l'invention. Dans le convertisseur de classe Phi-2 selon l'invention, le condensateur d'adaptation d'impédance Cmatch du circuit d'adaptation d'impédance en « L » est remplacé par un réseau équivalent de condensateurs C1-C3-C4. Le premier condensateur C1 se trouve en parallèle avec le condensateur C3 en série avec le condensateur C4. Un pont diviseur capacitif PDC est obtenu en prélevant une tension entre un premier point intermédiaire PM1, situé entre les condensateurs C3 et C4, et un potentiel de référence GND (par exemple une masse). La charge du fabricant Rfab est située entre la borne de sortie BSO et le potentiel de référence GND. La tension de sortie Vout peut être mesurée aux bornes de la charge du fabricant Rfab. Le pont diviseur capacitif PDC et la charge du fabricant Rfab sont connectés en parallèle. Ainsi, une fraction de la tension de sortie Vout est prélevée aux bornes du condensateur C4. La fraction de la tension de sortie Vout est calculée afin de fournir un niveau de tension proche de la tension de pilotage du transistor INT. La tension de sortie Vout est un sinus, qu'il convient de ramener à une valeur acceptable par la grille du transistor INT (environ 6 V pour un transistor GaN), centrée autour de la valeur de la tension de seuil Vth du transistor INT.

Un deuxième condensateur C2 est directement connecté à la grille G du transistor INT. Le circuit réactif CRE, formé par le deuxième condensateur C2 et par la capacité d'entrée Cgs du transistor INT, forme un autre pont diviseur capacitif, pour réduire davantage la tension de pilotage de la grille. Le deuxième condensateur C2 a également une fonction de filtrage de la composante continue de la tension de grille Vgs.

Une première inductance L1 est connectée au point intermédiaire PM1 du pont diviseur capacitif PDC. La première inductance L1 forme un réseau oscillant avec le condensateur C4, le deuxième condensateur C2 et la capacité grille-source Cgs du transistor INT. La valeur de la première inductance L1 est déterminée de façon à ce que la fréquence d'oscillation du réseau oscillant soit égale à la fréquence de commutation souhaitée du transistor INT. Cette valeur pourra toutefois être corrigée, pour tenir compte du dimensionnement des autres composants. La valeur de la première inductance L1 est également déterminée de façon à apporter un déphasage au signal de sortie, de façon à respecter la condition de commutation douce (ZVS).

La tension Vgs n'est pas linéaire : elle n'augmente pas de façon linéaire, en fonction de la charge totale de la grille. Le palier de la tension Vgs est égal à la tension Miller (valeur de tension correspondante au plateau Miller), et qui désigne la tension nécessaire à la recharge de la capacité drain-grille du transistor Cgd, également appelée capacité Miller. En dehors de ce palier, tension Vgs augmente, avec la même pente avant et après le palier, proportionnellement à la charge totale. Ainsi, la tension Vgs obtenue sur la grille G du transistor INT peut ne pas être centrée autour de la tension de seuil Vth. Dans le pire des cas, la tension Vgs peut être constamment inférieure à la tension de seuil Vth, ce qui empêcherait toute commutation du transistor INT.

Pour compenser la non linéarité de la tension Vgs, un pont diviseur résistif PDR est connecté entre la borne d'entrée BEN et le potentiel de référence GND. Le pont diviseur résistif PDR comprend une première résistance R1 en série avec une deuxième résistance R2. Un deuxième point milieu PM2 est disposé entre la première résistance R1 et la deuxième résistance R2. Une fraction de la tension continue d'entrée Vin est prélevée au niveau du deuxième point milieu PM2. Cette fraction est ajoutée à la composante sinusoïdale extraite de la tension de sortie Vout. L'ajout d'une composante continue à la composante sinusoïdale permet de s'assurer que le signal de pilotage de la grille oscille autour de la tension de seuil Vth du transistor INT.

La deuxième résistance R2 peut être une résistance variable. Le réglage de la valeur de la deuxième résistance R2 permet de faire varier finement le rendement du convertisseur.

Le circuit de pilotage de la grille du transistor INT est donc auto-oscillant en ce qu'il crée et entretient les oscillations nécessaires à la commutation du transistor INT.

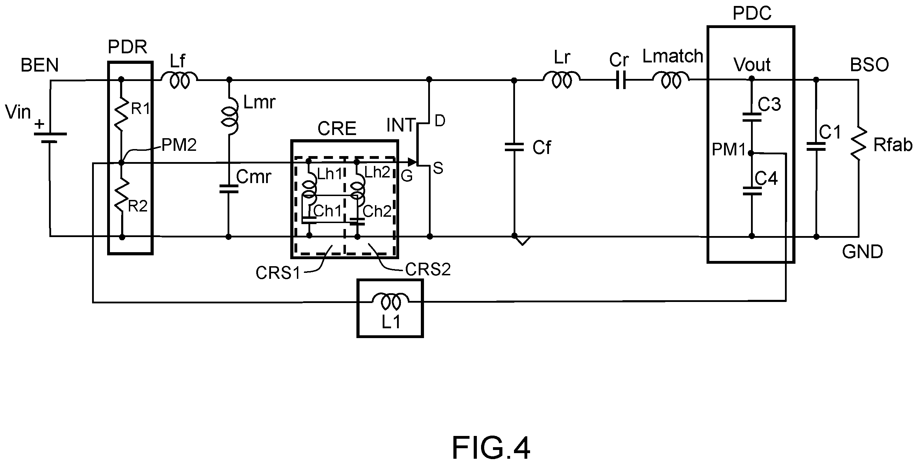

La figure 4 illustre une variante du convertisseur selon un mode de réalisation qui n'est pas inclus dans l'objet des revendications.

Le convertisseur selon cette variante comprend également un pont diviseur capacitif PDC, et une première inductance L1.

Le circuit réactif CRE est composé d'au moins un circuit résonant série. Sur la figure 4, deux circuits résonants série (CRS1, CRS2) sont illustrés, mais la présence d'un seul circuit résonant série peut être envisagée. Chacun des circuits résonants série est connecté entre la grille du transistor INT et le potentiel de référence GND. Chacun des circuits résonants série est composé d'une inductance (Lh1, Lh2) et d'un condensateur (Ch1, Ch2). Les valeurs de l'inductance et du condensateur d'un premier circuit résonant série CRS1 sont déterminées de façon à ce que la fréquence de résonance du premier circuit résonant série soit égale à la fréquence de l'harmonique d'amplitude la plus élevée (après celle de rang 1, qui correspond à la composante fondamentale) de la tension de grille du transistor INT. Ainsi, l'inductance et le condensateur du premier circuit résonant série court-circuitent l'harmonique le plus élevé. De la même manière, un deuxième circuit résonant série CRS2 (de rang 2) peut être disposé en parallèle du premier circuit résonant série CRS1. Les valeurs de l'inductance et du condensateur du deuxième circuit résonant série sont déterminées de façon à ce que la fréquence de résonance du deuxième circuit résonant série soit égale la fréquence du deuxième harmonique le plus élevé de la tension de grille du transistor INT. D'autres circuits résonant série du même ordre peuvent être disposés en parallèle.. Le signal de grille est ainsi rendu plus sinusoïdal en supprimant les harmoniques qui le distordent, ce qui provoque un amorçage ou un blocage plus rapide du transistor INT, ce qui contribue à l'amélioration du rendement du convertisseur.

Un pont diviseur résistif est connecté entre la borne d'entrée BEN et le potentiel de référence GND, afin de rajouter une composante continue et centrer, si besoin, la sinusoïde du signal de commande de la grille autour de la tension de seuil Vth.

Le signal de pilotage est ainsi principalement constitué par sa composante fondamentale, de forme sinusoïdale. Le pilotage de la grille par un sinus permet d'obtenir une meilleure commutation du transistor, et un rendement plus élevé.

Le convertisseur, selon l'une ou l'autre des variantes, ne contient que des composants passifs, et sans source continue additionnelle. Enfin, il ne contient pas de transistor autre que celui nécessaire à la structure Phi-2, ce qui évite d'avoir à gérer des temps morts. Il est rappelé que la gestion des temps morts est nécessaire lorsqu'il y a au moins deux transistors branchés en série, en parallèle avec une source de tension, afin d'éviter la présence de court-circuits lorsque deux transistors sont passants en même temps. En haute et très haute fréquence, la période de commutation est tellement faible qu'elle devient du même ordre de grandeur que les temps morts nécessaires au bon fonctionnement du circuit, ce qui complexifie la gestion des temps morts.

Le convertisseur précédemment décrit peut faire partie d'un dispositif de conversion DC/DC, en connectant par exemple la sortie du convertisseur à un étage de transformation, qui serait lui-même connecté à un redresseur.

La section qui suit décrit un exemple de dimensionnement du convertisseur objet de l'invention, selon le mode de réalisation illustré par la figure 3, pour une tension d'entrée Vin de 30 V, une puissance de sortie de 30 W, et une fréquence de commutation souhaitée $f_{commutation}$ de 40 MHz.

Le dimensionnement de l'inductance d'entrée Lf, du réseau résonant série Lr-Cr et du filtre Lmr-Cmr est décrit dans le document « A high-frequency resonant inverter topology with low-voltage stress » (Rivas et al., IEEE Transactions on power electronics, vol. 23, No. 4, July 2008).

On obtient Lf = 50 nH, Lmr = 35 nH, Cmr = 113 pF, Lr = 50 nH, Cr = 2 nF.

Le dimensionnement du circuit d'adaptation {Lmatch-Cmatch} est décrit dans l'article « Resistance Compression Networks for Radio-Frequency Power Conversion » (Y. Han, O. Leitermann, D.A. Jackson and D. J. Perreault, IEEE Transactions On Power Electronics, Vol. 22, No. 1, January 2007).

On obtient Lmatch = 79 nH, Cmatch = 165 pF.

Le condensateur Cmatch est divisé en C1 parallèle avec (C3 série C4), de manière à obtenir une impédance pour la branche (C3 série C4) très large (environ dix fois) par rapport à la charge de sortie, afin de ne pas priver la charge de la puissance qu'elle devrait recevoir.

Le pont diviseur capacitif PDC doit être dimensionné pour ramener la tension Vout aux alentours de 6V (la tension de pilotage du transistor). Nous obtenons ainsi les deux équations de dimensionnement :
[Math. 1]

$$\frac{1}{2\pi.f_{commutation}.(C3+C4)} >> 10.R_{fab} \qquad (1)$$

[Math. 2]

$$\frac{C3}{C3+C4} > \frac{V_{div}}{V_{out}} \qquad (2)$$

Où $V_{div}$ est égal à la tension entre le premier point milieu PM1 et le potentiel de référence GND, et $R_{fab}$ l'impédance de charge fournie par le fabricant.

On trouve C3 = 10pF, C4 = 100 pF.

Pour trouver la valeur de la première inductance L1, on commence par calculer la capacité équivalente Ceq de la capacité de grille Cgs et du deuxième condensateur C2.

Puis, en partant de $f_{commutation} = f_{oscillation}$ (où $f_{oscillation}$ est la fréquence de résonance du circuit L1-Ceq), on obtient l'équation :
[Math. 3]

$$f_{commutation} = \frac{1}{2\pi.\sqrt{L1.Ceq}} \qquad (3)$$

On trouve L1 = 200 nH, cette valeur est provisoire et sera modifiée dès l'introduction du deuxième condensateur C2.

Le deuxième condensateur C1 est introduit afin de réaliser un autre diviseur de tension au niveau de la grille du transistor INT. Cgs est donnée par la datasheet (fiche technique) du transistor INT et la valeur du deuxième condensateur C2 est déterminée par l'équation :
[Math. 4]

$$\frac{C2}{C2+Cgs} = \frac{V_{gs}}{V_{osc}} \qquad (4)$$

Où $V_{gs}$ représente la tension entre la grille et le potentiel de référence GND, et $V_{osc}$ représente la tension entre le deuxième point milieu PM2 et le potentiel de référence GND.

On obtient C2 = 300 pF, et on ajuste la valeur de la première inductance L1 à 230 nH en utilisant la simulation afin de maintenir $f_{oscillation}$ à 40 MHz.

**Revendications**

1. Convertisseur de puissance d'une tension d'entrée continue (Vin) en tension de sortie alternative (Vout), le convertisseur de puissance ayant une structure de type Phi-2, et comprenant :

   - Une borne d'entrée (BEN) de la tension d'entrée continue (Vin),
   - Une borne de sortie (BSO) de la tension de sortie alternative (Vout),
   - Un interrupteur de puissance (INT) équipé d'une électrode de commande (G), d'une première électrode (D) et d'une deuxième électrode (S) reliée à un potentiel de référence (GND),
   **caractérisé en ce que** le convertisseur comprend en outre un circuit auto-oscillant, connecté entre la borne de sortie (BSO) et l'électrode de commande (G), et configuré pour fournir et entretenir un signal de pilotage sinusoïdal à l'électrode de commande de l'interrupteur de puissance (INT) à partir de la tension de sortie (Vout) le circuit auto-oscillant comprenant un premier pont diviseur capacitif (PDC) connecté entre la borne de sortie (BSO) et le potentiel de référence (GND), et comprenant en outre une première inductance (L1) connectée d'une part à un premier point milieu (PM1) du pont diviseur capacitif (PDC) et d'autre part à l'électrode de commande (G) par l'intermédiaire d'un circuit réactif (CRE),
   le circuit réactif (CRE) étant formé par un deuxième condensateur (C2) connecté entre l'électrode de commande (G) et la première inductance (L1), et par la capacité parasite (Cgs) entre l'électrode de commande (G) et la deuxième électrode (S) de l'interrupteur de puissance (INT).

2. Convertisseur selon la revendication 1, comprenant une deuxième inductance (Lmatch) connectée à la borne de sortie (BSO), un premier condensateur (C1) connecté entre la borne de sortie (BSO) et le potentiel de référence (GND), la deuxième inductance (Lmatch), le premier condensateur (C1) et le premier pont diviseur capacitif (PDC) étant configurés pour former un réseau d'adaptation d'impédance en « L » pour une valeur de charge prédéfinie en sortie du convertisseur.

3. Convertisseur selon l'une des revendications 1 ou 2, comprenant un pont diviseur résistif (PDR), connecté entre la borne d'entrée (BEN) et le potentiel de référence (GND), disposant d'un deuxième point milieu (PM2) connecté à la première inductance (L1) et au circuit réactif (CRE), le pont diviseur résistif (PDR) étant configuré pour fournir une composante continue issue de la tension d'entrée (Vin), la composante continue étant égale à une tension de seuil entre l'électrode de commande (G) et la deuxième électrode (S) de l'interrupteur de puissance (INT).

**Patentansprüche**

1. Stromrichter zum Umwandeln einer Eingangsgleichspannung (Vin) in eine Ausgangswechselspannung (Vout), wobei der Stromrichter eine Struktur vom Typ Phi-2 aufweist, und Folgendes umfassend:

   - einen Eingangsanschluss (BEN) für die Eingangsgleichspannung (Vin),
   - einen Ausgangsanschluss (BSO) für die Ausgangswechselspannung (Vout),
   - einen Leistungsschalter (INT), der mit einer Steuerelektrode (G), einer ersten Elektrode (D) und einer zweiten Elektrode (S), die mit einem Bezugspotential (GND) verbunden ist, versehen ist,
   **dadurch gekennzeichnet, dass** der Richter ferner eine selbsterregende Schaltung umfasst, die zwischen dem Ausgangsanschluss (BSO) und der Steuerelektrode (G) angeschlossen ist, und dafür konfiguriert ist, ein sinusförmiges Antriebssignal von der Ausgangsspannung (Vout) für die Steuerelektrode des Leistungsschalters (INT) bereitzustellen und aufrechtzuerhalten,
   wobei die selbsterregende Schaltung eine erste kapazitive Teilerbrücke (PDC) umfasst, die zwischen dem Ausgangsanschluss (BSO) und dem Bezugspotential (GND) angeschlossen ist, und ferner eine erste Drosselspule (L1), die durch eine Blindschaltung (CRE) einerseits mit einem ersten Mittelpunkt (PM1) der kapazitiven Teilerbrücke (PDC) und andererseits mit der Steuerelektrode (G) verbunden ist,
   wobei die Blindschaltung (CRE) durch einen zweiten Kondensator (C2), der zwischen der Steuerelektrode (G) und der ersten Drosselspule (L1) angeschlossen ist, und durch die parasitäre Kapazität (Cgs) zwischen der Steuerelektrode (G) und der zweiten Elektrode (S) des Leistungsschalters (INT) gebildet ist.

2. Richter nach Anspruch 1, umfassend eine zweite Drosselspule (Lmatch), die an den Ausgangsanschluss (BSO) angeschlossen ist, einen ersten Kondensator (C1), der zwischen dem Ausgangsanschluss (BSO) und dem Bezugspotential (GND) angeschlossen ist, wobei die zweite Drosselspule (Lmatch), der erste Kondensator (C1) und die erste kapazitive Teilerbrücke (PDC) dafür konfiguriert sind, ein Impedanzanpassungsnetz in L-Konfiguration für einen vordefinierten Lastwert am Ausgang des Richters zu bilden.

3.  Richter nach einem der Ansprüche 1 oder 2, umfassend eine Widerstands-Teilerbrücke (PDR), die zwischen dem Eingangsanschluss (BEN) und dem Bezugspotential (GND) angeschlossen ist, die einen zweiten Mittelpunkt (PM2) aufweist, der an die erste Drosselspule (L1) und an die Blindschaltung (CRE) angeschlossen ist, wobei die widerstandsfähige Teilerbrücke (PDR) dafür konfiguriert ist, eine Gleichspannungskomponente bereitzustellen, die aus der Eingangsspannung (Vin) stammt, wobei die Gleichspannungskomponente gleich einer Schwellenspannung zwischen der Steuerelektrode (G) und der zweiten Elektrode (S) des Leistungsschalters (INT) ist.

**Claims**

1.  A power converter for converting a DC input voltage (Vin) into an AC output voltage (Vout), the power converter having a structure of type Phi-2, and comprising:

    - an input terminal (BEN) for the DC input voltage (Vin),
    - an output terminal (BSO) for the AC output voltage (Vout),
    - a power switch (INT) equipped with a control electrode (G), a first electrode (D) and a second electrode (S) linked to a reference potential (GND),
    **characterised in that** the converter further comprises a self-oscillating circuit, connected between the output terminal (BSO) and the control electrode (G), and configured to supply and maintain a sinusoidal drive signal to the control electrode of the power switch (INT) from the output voltage (Vout);
    the self-oscillating circuit comprising a first capacitive divider bridge (PDC) connected between the output terminal (BSO) and the reference potential (GND), and further comprising a first inductor (L1) connected on one side to a first midpoint (PM1) of the capacitive divider bridge (PDC) and on the other side to the control electrode (G) via a reactive circuit (CRE),
    the reactive circuit (CRE) being formed by a second capacitor (C2) connected between the control electrode (G) and the first inductor (L1) and by the stray capacitance (Cgs) between the control electrode (G) and the second electrode (S) of the power switch (INT).

2.  The converter according to claim 1, comprising a second inductor (Lmatch) connected to the output terminal (BSO), a first capacitor (C1) connected between the output terminal (BSO) and the reference potential (GND), the second inductor (Lmatch), the first capacitor (C1) and the first capacitive divider bridge (PDC) being configured to form an "L" configuration impedance matching network for a predefined load value at the output of the converter.

3.  The converter according to one of claim 1 or 2, comprising a resistive divider bridge (PDR), connected between the input terminal (BEN) and the reference potential (GND), having a second midpoint (PM2) connected to the first inductor (L1) and to the reactive circuit (CRE), the resistive divider bridge (PDR) being configured to supply a DC component derived from the input voltage (Vin), the DC component being equal to a threshold voltage between the control electrode (G) and the second electrode (S) of the power switch (INT).

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RIVAS et al.** *IEEE Transactions on power electronics*, July 2008, vol. 23 (4)
- **CHOI et al.** High-Frequency, High-Power Resonant Inverter With eGaN FET for Wireless Power Transfer. *IEEE Transactions on power electronics*, March 2018, vol. 33 (4)
- **Y. HAN** ; **O. LEITERMANN** ; **D.A. JACKSON** ; **D. J. PERREAULT**. Resistance Compression Networks for Radio-Frequency Power Conversion. *IEEE Transactions On Power Electronics*, January 2007, vol. 22 (1)
- **RIVAS et al.** A high-frequency resonant inverter topology with low-voltage stress. *IEEE Transactions on power electronics*, July 2008, vol. 23 (4)